# EUROPÄISCHE PATENTANMELDUNG

(11) **EP 4 276 322 A1**
(43) Veröffentlichungstag der Anmeldung: **15.11.2023**
(21) Anmeldenummer: 22172980.9
(22) Anmeldetag: 12.05.2022
(51) Int. Cl.: F16C 33/76, F16C 33/78, F16J 15/3232, F16C 33/58

(54) **GROSSWÄLZLAGER**

(71) Anmelder: thyssenkrupp rothe Erde Germany GmbH, 44137 Dortmund (DE); Xuzhou Rothe Erde slewing bearing Co. Ltd., Xuzhou, Jiangsu 221004 (CN); thyssenkrupp AG, 45143 Essen (DE)
(72) Erfinder: Sharypkin, Yevgenij, 59556 Lippstadt - Bad Waldliesborn (DE); Lüneburg, Bernd, 45481 Mülheim (DE); Rollmann, Jörg, 59558 Lippstadt (DE); Li, Jinfeng, Xuzhou (CN); Tang, Weibin, Xuzhou City (CN); Liu, Fengyong, Xuzhou (CN); Zhang, Lei, Xuzhou (CN); Santoro, Simone Angelo, 59558 Lippstadt (DE); Breda, Michael, 59555 Lippstadt (DE)
(74) Vertreter: thyssenkrupp Intellectual Property GmbH

(57) **Zusammenfassung**

Die vorliegende Erfindung betrifft ein Großwälzlager mit einem ersten und zweiten Lagerring und einer Spaltdichtung. Die Spaltdichtung weist insgesamt vier Dichtlippen auf. Um ein Großwälzlager mit einer verbesserten Abdichtung zur Verfügung zu stellen, wird vorgeschlagen, dass die Spaltdichtung (4) eine in dem Spalt (3) angeordnete vierte Dichtlippe (14) aufweist, die sich in den Spalt (3) hinein erstreckt und an einer vierten Dichtfläche (15) abstützt, wobei die vierte Dichtfläche (15) an einem den Spalt (3) in radialer Richtung begrenzenden Abschnitt des zweiten Lagerrings (2) ausgebildet ist, und wobei die vierte Dichtfläche (15) von der Außenseite (A) des Großwälzlagers her gesehen hinter der dritten Dichtfläche (13) angeordnet ist.

## Beschreibung

Die Erfindung betrifft ein Großwälzlager mit den Merkmalen des Oberbegriffs von Patentanspruch 1.

In Großwälzlagern, insbesondere in Blattlagern für Windkraftanlagen, werden statische Dichtungen zur Abdichtung gegen Fettaustritt verwendet. "Statisch" bedeutet, dass die Dichtung sowohl bei stationären als auch bei diskontinuierlichen Drehbewegungen der Lagerinnenringe oder der Lageraußenringe abdichtet. Dabei führt das Blattlager im Betrieb eine Schwenkbewegung aus, um den Blattwinkel zur optimalen Ausnutzung der Windkraft einzustellen.

Aufgabe der Abdichtung von Blattlagern ist es zum einen, einen Austritt des Schmierfetts aus dem Lagerinneren und damit eine Verschmutzung der Umwelt und eine Schmierstoffverarmung im Lagerinneren zu verhindern. Andererseits soll auch das Eindringen von festen Verunreinigungen und Flüssigkeiten von außen in das Lager hinein vermieden werden, um die Funktion des Lagers, z.B. durch Korrosion oder mechanische Beschädigungen, nicht zu beeinträchtigen. Daher müssen die Blattlagerdichtungen eine vollständige Dichtheit während des Betriebs gewährleisten. Gleichzeitig muss die Dichtung eine Dichtspaltveränderung aufgrund von Verformungen und Verlagerungen durch lastbedingte Radialbewegungen der Ringe zueinander leckagefrei überbrücken. Diese Dichtspaltveränderung ist bei großen Lagern besonders groß und kann ohne Weiteres mehrere Millimeter betragen.

Außerdem ist es notwendig, das Lager in regelmäßigen Abständen nachzuschmieren, um einen normalen Betrieb und eine ausreichende Lebensdauer zu gewährleisten. Hier besteht die Gefahr, dass im Rahmen der Nachschmierung hohe lokale Drücke auftreten, die zu Fettaustritt bis hin zur Beschädigung und Leckage der Dichtung führen können.

Eine weitere Grundeigenschaft, die eine Spaltdichtung für Großwälzlager aufweisen muss, ist ihre sichere Montagefähigkeit. Hier muss sichergestellt werden, dass die Dichtung prozesssicher eine definierte Position im Bauraum einnimmt, die sich im Betrieb und bei (lokalem) Überdruck nicht verändert. Dieser Aspekt ist besonders bei großen Lagern entscheidend, da schon geringe Fluchtungsfehler zu Leckagen und Dichtungsausfall führen können.

Aus der EP 2 672 133 B1 ist ein Großwälzlager gemäß dem Oberbegriff von Anspruch 1 mit einer den Spalt zwischen den Lagerringen abdichtenden Spaltdichtung bekannt. Eine Spaltdichtung für Großwälzlager muss dabei verschiedene, voranstehend und nachstehend aufgeführte Anforderungen erfüllen.

Bei Großwälzlagern nimmt die Aufweitung des Spalts zwischen den Lagerringen, die sich durch die Belastungen einstellt, die im Betrieb auf die Lagerringe einwirken, bei einer gegebenen Belastung mit dem Lagerringdurchmesser zu. Dies gilt zum Beispiel für Blattlager von Windenergieanlagen, die im Betrieb sowohl großen statischen Belastungen (z.B. durch Biegemomente infolge des Gewichts des Rotorblattes) als auch hohen dynamischen Belastungen (z.B. infolge der von dem Rotorblatt übertragenen windkraftinduzierten Kräfte und Momente) ausgesetzt sind. Als Daumenregel kann z.B. angegeben werden, dass es pro Meter Lagerringdurchmesser zu einer Aufweitung des Spaltes zwischen den Lagerringen um ca. 1mm kommt.

Eine verlässlich wirkende Spaltdichtung muss derartige Spaltaufweitungen ausgleichen können, ohne ihre Dichtwirkung zu verlieren.

Ferner muss eine Spaltdichtung sowohl im statischen Fall (d.h. im Fall von Blattlagern z.B. bei Stillstand des Rotorblatts) als auch im dynamischen Fall (d.h. im Fall von Blattlagern z.B. bei (unterschiedlich schneller) Drehung des Rotorblatts um die Rotornabe) den Spalt zwischen den Lagerringen zuverlässig abdichten.

Auch muss eine Spaltdichtung in der Lage sein, einen sich im Betrieb einstellenden oder bewusst in das Lager eingebrachten Überdruck im Lagerinneren von z.B. 3 bar oder mehr auszuhalten, ohne dass die Dichtwirkung dadurch negativ beeinflusst wird.

Schließlich muss die Spaltdichtung möglichst einfach und sicher montierbar sein, insbesondere muss ein fehlerhafter, die Dichtwirkung negativ beeinträchtigender Einbau der Spaltdichtung vermieden werden.

Mit der aus der EP 2 672 133 B1 bekannten Spaltdichtung können die unterschiedlichen, voranstehend beschriebenen Anforderungen insbesondere bei Lagern mit großem Durchmesser nicht in zufriedenstellender Weise erfüllt werden.

Aufgabe der Erfindung ist es, ein Großwälzlager mit einer verbesserten Abdichtung zur Verfügung zu stellen.

Gelöst wird diese Aufgabe durch ein Großwälzlager mit den Merkmalen von Anspruch 1. Vorteilhafte Weiterbildungen ergeben sich aus den Unteransprüchen, der nachfolgenden Beschreibung sowie den Zeichnungen.

Das erfindungsgemäße Großwälzlager weist einen ersten Lagerring, einem zweiten Lagerring und einen Spalt zwischen dem ersten und dem zweiten Lagerring auf, wobei in dem Spalt eine ringförmige Spaltdichtung angeordnet ist, mit der ein Austreten von Schmierstoff aus dem Inneren des Großwälzlagers nach außen verhinderbar ist, wobei die Spaltdichtung einen Dichtungsfuß aufweist, der in einer in dem ersten Lagerring vorgesehenen Verankerungsnut aufgenommen ist, wobei die Spaltdichtung eine erste Dichtlippe, eine zweite Dichtlippe und eine dritte Dichtlippe aufweist, wobei sich die erste Dichtlippe gegen eine an dem zweiten Lagerring ausgebildete erste Dichtfläche abstützt, wobei die zweite und die dritte Dichtlippe in einer in dem zweiten Lagerring angeordneten Gleitnut derart aufgenommen sind, dass die zweite Dichtlippe sich gegen eine die Gleitnut begrenzende zweite Dichtfläche und die dritte Dichtlippe sich gegen eine die Gleitnut begrenzende dritte Dichtfläche abstützt, wobei von einer Außenseite des Großwälzlagers her gesehen die erste Dichtfläche vor der zweiten Dichtfläche und die zweite Dichtfläche vor der dritten Dichtfläche angeordnet ist.

Erfindungsgemäß ist vorgesehen, dass die Spaltdichtung eine in dem Spalt angeordnete vierte Dichtlippe aufweist, die sich in den Spalt hinein erstreckt und an einer vierten Dichtfläche abstützt, wobei die vierte Dichtfläche an einem den Spalt in radialer Richtung begrenzenden Abschnitt des zweiten Lagerrings ausgebildet ist, und wobei die vierte Dichtfläche von der Außenseite des Großwälzlagers her gesehen hinter der dritten Dichtfläche angeordnet ist.

Die vollständige Dichtigkeit des erfindungsgemäßen Wälzlagers wird durch eine Kombination der ersten, zweiten, dritten und vierten Dichtlippe erzielt. Die zusätzliche vierte Dichtlippe verhindert im Betrieb ein entweichen von Fett in die Zwischenräume von Dichtung und Einbauraum und einen anschließenden Weitertransport durch "Pumpmechanismen". Lediglich bei sehr großen Vergrößerungen des Dichtspalts, wie sie etwa bei Auftreten von Extremlasten im Betrieb des Lagers auftreten können, kann Fett in die Zwischenräume von Dichtung und Einbauraum gelangen. Diese Betriebszustände treten jedoch nur selten auf, so dass keine zu große Fettmenge unkontrolliert in den Zwischenraum von Dichtung und Einbauraum eindringt. Der Eintritt einer geringen Fettmenge bei diesen Betriebszuständen mit extremen Lasten ist sogar wünschenswert, um sämtliche Dichtungsbereiche zu schmieren und damit einen geringen Drehwiderstand und eine längere Standzeit der Dichtung zu erzielen.

Durch die erfindungsgemäß vorgesehene vierte Dichtlippe wird die Dichtigkeit der Spaltdichtung deutlich erhöht im Vergleich zu der gattungsgemäßen Spaltdichtung. Durch die Positionierung der vierten Dichtfläche in einer Position, die von der Außenseite des Großwälzlagers her gesehen hinter der dritten Dichtfläche liegt, wird im Zusammenwirken mit der vierten Dichtlippe im Vergleich zu dem gattungsbildenden Stand der Technik eine zusätzliche radiale Dichtungsebene realisiert.

Die Dichtwirkung der erfindungsgemäßen Spaltdichtung ist insbesondere bei Vorliegen eines erhöhten Innendrucks im Inneren des Wälzlagers gegenüber dem Stand der Technik deutlich verbessert, weil die in dem Spalt angeordnete und mit der vierten Dichtfläche zusammenwirkende vierte Dichtlippe durch den Lagerinnendruck gegen die an dem zweiten Lagerring ausgebildete vierte Dichtfläche gepresst wird. Dadurch wird die Dichtwirkung der Spaltdichtung erhöht, auch wenn sich die Lagerringe unter Belastung relativ zueinander in radialer Richtung bewegen. Ein im Betrieb des Lagers vorliegender Überdruck im Lagerinneren sorgt dafür, dass die vierte Dichtlippe aufgrund ihrer Elastizität an die vierte Dichtfläche angepresst wird, so dass die Dichtwirkung der vierten Dichtlippe auch bei sich relativ zueinander in radialer Richtung bewegenden Lagerringen aufrechterhalten bleibt. Außerdem wird dadurch die Gefahr verringert, dass die Spaltdichtung durch einen Überdruck im Lagerinneren aus ihrer Einbauposition herausgedrückt wird.

Ein Überdruck im Lagerinneren bewirkt außerdem eine Druckentlastung des Dichtungsgrundkörpers und eine mechanische Entlastung (Zug, Biegung und Scherung) des Dichtungsfußes und des Dichtungsgrundkörpers.

Auf diese Weise wird durch die erfindungsgemäße Spaltdichtung eine Überdruckfestigkeit von größer 5 bar Überdruck erreicht, da bei geringen bis mittleren Dichtspaltaufweitungen lediglich der Dichtungsfuß und die vierte Dichtlippe mit Überdruck beaufschlagt werden, während die erste, die zweite und die dritte Dichtlippe eine definierte, stabile Lage im Einbauraum einnehmen und diese auch beibehalten. Dies hat den positiven Effekt, dass der Drehwiderstand ebenfalls gering bleibt, da insbesondere die axiale zweite und die axiale dritte Dichtlippe durch den Überdruck nicht zusätzlich auf die Lauffläche angepresst werden, was die Reibung und damit den Drehwiderstand und den Verschleiß vergrößern würde.

Insgesamt wird somit durch die erfindungsgemäße Spaltdichtung, die Art und Weise ihrer Anordnung in dem Spalt zwischen den Lagerringen und das Zusammenwirken der vierten Dichtlippe mit einer an dem zweiten Lagerring ausgebildeten vierten Dichtfläche ein Großwälzlager zur Verfügung gestellt, das im Vergleich zu dem gattungsbildenden Stand der Technik eine wesentlich verbesserte Abdichtung und geringeren Verschleiß und damit höhere Standzeit aufweist.

Die Spaltdichtung kann als extrudiertes Dichtungsprofil ausgebildet sein und insbesondere aus den Materialien NBR (engl.: Nitrile Butadiene Rubber, deutsch: Acrylnitrilbutadien-Kautschuk), HNBR (engl.: Hydrogenated Nitrile Butadiene Rubber, deutsch: Hydrierter Acrylnitrilbutadien-Kautschuk) oder FKM (Fluor-Kautschuk) bestehen.

Nach einer Ausführungsform des erfindungsgemäßen Großwälzlagers ist vorgesehen, dass die vierte Dichtlippe mit einer die vierte Dichtfläche beinhaltenden ersten Bezugsebene einen Anstellwinkel einschließt, wobei die vierte Dichtlippe in einem an einen Grundkörper der Spaltdichtung angrenzenden Übergangsbereich eine Breite aufweist, wobei die Fähigkeit des Lagers, eine Dichtspaltvergrößerung auszugleichen, durch die Wahl des Anstellwinkels und der Breite sowie einer senkrecht zur Breite verlaufenden Länge der vierten Dichtlippe einstellbar ist.

Die erste Bezugsebene kann zylindrisch ausgebildet sein.

Durch die Größe des Anstellwinkels kann die Anpresskraft beeinflusst werden, mit der die vierte Dichtlippe an die vierte Dichtfläche angepresst wird. Je größer der Anstellwinkel, desto größer ist die Anpresskraft. Der Anstellwinkel bzw. die Anpresskraft sind auch wichtig für die Aufrechterhaltung der Dichtwirkung der vierten Dichtlippe, wenn sich der Spalt zwischen den Lagerringen infolge von Relativbewegungen der Lagerringe zueinander vergrößert. Mit einer Spaltdichtung, die im Einbauzustand eine hohe Anpresskraft der vierten Dichtlippe an die vierte Dichtfläche aufweist, kann die Dichtwirkung der vierten Dichtlippe auch noch bei größeren Spaltaufweitungen aufrechterhalten werden, als dies mit Spaltdichtungen mit niedrigerer Anpresskraft bzw. geringerem Anstellwinkel möglich ist. Der Anstellwinkel der vierten Dichtlippe ist somit ein Gestaltungs- und Auslegungsparameter der Spaltdichtung, mit dem die Dichtwirkung der Spaltdichtung gezielt beeinflusst werden kann. Die Spaltdichtung kann mittels dieses Parameters an die im Betrieb des Großwälzlagers zu erwartenden Aufweitungen des Spaltes zwischen den Lagerringen angepasst werden. Dadurch wird es möglich, bei baugleichen Großwälzlagern durch den Einsatz von unterschiedlichen Spaltdichtungen, die sich nur durch unterschiedlich große Anstellwinkel voneinander unterscheiden, eine Dichtigkeit des Lagers für unterschiedlich große Belastungen der Lagerringe und dadurch hervorgerufene, unterschiedlich große Aufweitungen des Spalts zwischen den Lagerringen sicherzustellen.

Neben der Vorspannung der vierten Dichtlippe gegen die vierte Dichtfläche in der Einbaulage der Spaltdichtung durch die Wahl des Anstellwinkels hat auch die Wahl der Breite der vierten Dichtlippe in einem Übergangsbereich, der an den Grundkörper der Spaltdichtung angrenzt, einen Einfluss auf die Fähigkeit des erfindungsgemäßen Lagers, Dichtspaltvergrößerungen auszugleichen. Eine größere Breite der vierten Dichtlippe in diesem Übergangsbereich führt zu einer größeren Steifigkeit der vierten Dichtlippe. Umgekehrt führt eine kleinere Breite der vierten Dichtlippe in diesem Übergangsbereich zu einer geringeren Steifigkeit und größeren Flexibilität der vierten Dichtlippe.

Somit ist auch die Breite der vierten Dichtlippe in dem an den Grundkörper der Spaltdichtung angrenzenden Übergangsbereich ein Gestaltungs- und Auslegungsparameter der Spaltdichtung, mit dem die Dichtwirkung und die Fähigkeit des Lagers bzw. der Dichtung zum Ausgleichen von im Betrieb auftretenden Dichtspaltvergrößerungen gezielt beeinflusst werden kann.

Beide Parameter, also Anstellwinkel der vierten Dichtlippe und Breite der vierten Dichtlippe in dem an den Grundkörper der Spaltdichtung angrenzenden Übergangsbereich, können erfindungsgemäß aufeinander abgestimmt werden, um die Fähigkeit des Lagers bzw. der Spaltdichtung zum Ausgleichen von auftretenden Dichtspaltvergrößerungen auszulegen und optimiert zu gestalten.

Zusätzlich stellt auch die Länge der vierten Dichtlippe einen Parameter dar, mit dem die Fähigkeit des Lagers bzw. der Spaltdichtung zum Ausgleichen von auftretenden Dichtspaltvergrößerungen beeinflusst werden kann.

Alle drei Parameter Anstellwinkel, Breite und Länge der vierten Dichtlippe können aufeinander abgestimmt werden, um eine optimierte Fähigkeit des Lagers bzw. der Spaltdichtung zum Ausgleichen von auftretenden Dichtspaltvergrößerungen zu erreichen.

Gemäß einer Ausführungsform des erfindungsgemäßen Großwälzlagers ist vorgesehen, dass der erste Lagerring in einem der vierten Dichtfläche gegenüberliegenden, den Spalt begrenzenden Oberflächenbereich einen Montagebereich aufweist, durch den sich die Breite des Spalts erweitert. Der Montagebereich hat die Aufgabe, den fehlerfreien Einbau der Spaltdichtung zu erleichtern. Insbesondere verhindert der Montagebereich, dass die vierte Dichtlippe bei der Montage der Spaltdichtung unbeabsichtigt und unbemerkt in die Gleitnut hineingedrückt wird und somit nicht an der vierten Dichtfläche anliegt und damit keine Dichtwirkung entfalten kann. Der Montagebereich kann z.B. als Montagefase ausgebildet sein, die an dem ersten Lagerring ausgebildet ist. Alternativ kann der Montagebereich auch als stufenförmige Vergrößerung des Innendurchmessers des ersten Lagerrings ausgebildet sein. Der Montagebereich ermöglicht einen zuverlässigen, prozesssicheren, positionsgerechten, einfachen und wirksamen Einbau der Spaltdichtung in das Großwälzlager in einer definierten, stabilen Lage im Einbauraum.

Der Montagebereich verhindert somit eine unzulässige Verformung der vierten Dichtlippe durch Andrücken der vierten Dichtlippe gegen den Dichtungsgrundkörper und daraus resultierend das unzulässige Einklappen der vierten Dichtlippe in die Gleitnut.

Nach einer Ausführungsform des erfindungsgemäßen Großwälzlagers ist vorgesehen, dass der Montagebereich als Montagefase ausgebildet ist, durch die sich die Breite des Spalts konisch erweitert, wobei eine gedachte Verlängerung der Montagefase mit einer zu der ersten Bezugsebene parallelen zweiten Bezugsebene einen Fasenwinkel einschließt, und wobei der Fasenwinkel größer oder gleich dem Abspreizwinkel ist. Dadurch wird eine prozesssichere Montierbarkeit der Spaltdichtung erreicht.

Die zweite Bezugsebene kann zylindrisch ausgebildet sein.

Die Breite des Montagebereiches ist unter Berücksichtigung von Festigkeits- und Bauraumeinschränkungen möglichst zu maximieren. Hierdurch wird die Wahrscheinlichkeit einer im Rahmen der Montage nicht gewollten Abstützung der vierten Dichtlippe auf dem Absatz der Verankerungsnut des Dichtungsfusses minimiert.

Nach einer Ausführungsform des erfindungsgemäßen Großwälzlagers ist vorgesehen, dass die vierte Dichtlippe mit einer zu der ersten Bezugsebene parallelen dritten Bezugsebene einen Abspreizwinkel einschließt, wobei der Fasenwinkel größer oder gleich dem Abspreizwinkel ist. Durch die Wahl des Abspreizwinkels kann die Breite der vierten Dichtlippe in dem an den Grundkörper der Spaltdichtung angrenzenden Übergangsbereich gezielt beeinflusst werden. Wird der Fasenwinkel größer oder gleich dem Abspreizwinkel gewählt, so wird ein ungewolltes Abstützen der vierten Dichtlippe auf dem Montagebereich während der Montage der Spaltdichtung und damit ein unerwünschtes Einklappen der vierten Dichtlippe in die Gleitnut vermieden. Dies stellt eine prozesssichere Montierbarkeit der Spaltdichtung sicher. Dies gilt auch für den sogenannten "worst case"-Fall, d.h. auch wenn die Spaltdichtung bei der Montage in dem denkbar ungünstigsten Winkel angesetzt wird, kommt es nicht zu einem Eindrücken der vierten Dichtlippe in die Gleitnut.

Die dritte Bezugsebene kann zylindrisch ausgebildet sein.

Gemäß einer Ausführungsform des erfindungsgemäßen Großwälzlagers ist vorgesehen, dass der zweite Lagerring in einem Bereich zwischen der vierten Dichtfläche und der Gleitnut eine die Breite des Spalts verringernde Durchmesservergrößerung aufweist. Die Durchmesservergrößerung kann zum Beispiel durch einen an eine Kante des zweiten Lagerrings angeformten, abgesetzten Radius gebildet werden, wobei die Kante den Übergangsbereich zwischen der vierten Dichtungsfläche und der Gleitnut bildet. Neben diesem Radius kann die Durchmesservergrößerung auch eine Übergangsfläche aufweisen, die sich ausgehend von der vierten Dichtfläche zu dem Radius hin erstreckt. Die Übergangsfläche kann als konische Ringfläche ausgebildet sein, sie kann aber auch einen anderen, z.B. nichtlinearen Oberflächenverlauf aufweisen.

Auch diese Durchmesservergrößerung trägt zur prozesssicheren Positionierung der vierten Dichtlippe und zur Abstützung der vierten Dichtlippe bei Überdruck im Lagerinneren bei. Die Durchmesservergrößerung bewirkt bei der Montage der Spaltdichtung eine Führung der vierten Dichtlippe in die Sollposition auf der vierten Dichtfläche und verhindert ein unerwünschtes Einklappen der vierten Dichtlippe in die Gleitnut bei der Montage der Dichtung.

Nach einer Ausführungsform des erfindungsgemäßen Großwälzlagers ist vorgesehen, dass die Durchmesservergrößerung eine Übergangsfläche umfasst, wobei die Übergangsfläche an die erste Bezugsebene angrenzt, wobei die Übergangsfläche mit der ersten Bezugsebene einen Übergangswinkel einschließt. Bevorzugt entspricht der Übergangswinkel dem Anstellwinkel der vierten Dichtlippe in Einbaulage, d.h. der Übergangswinkel ist gleich groß ausgebildet wie der Anstellwinkel der vierten Dichtlippe in Einbaulage. Dadurch wird eine formschlüssige Abstützung der vierten Dichtlippe am zweiten Lagerring erreicht. Dies trägt zu einer stabilen Einbauposition der Spaltdichtung auch bei Überdruck im Lagerinneren bei.

Gemäß einer Ausführungsform des erfindungsgemäßen Großwälzlagers ist vorgesehen, dass der Übergangswinkel kleiner oder gleich groß ist wie der Anstellwinkel. Dadurch wird eine besonders wirksame formschlüssige Abstützung der vierten Dichtlippe und eine besonders stabile Einbauposition der Spaltdichtung bei Überdruck im Lagerinneren erreicht.

Nach einer Ausführungsform des erfindungsgemäßen Großwälzlagers ist vorgesehen, dass die vierte Dichtlippe eine Mittelachse aufweist, wobei eine Längserstreckung der vierten Dichtlippe ausgehend von einem Grundkörper der Spaltdichtung und entlang ihrer Mittelachse eine Länge aufweist, wobei die Länge eine Funktion des Lagerdurchmessers ist und zwischen 1 mm und 12 mm beträgt.

Die Länge L der vierten Dichtlippe ist eine Funktion der Dichtspaltänderung, welche wiederum eine Funktion der Lagergröße/des Lagerdurchmessers ist, der der vierten Dichtfläche entspricht, und beträgt abhängig vom Lagerdurchmesser zwischen 1 mm (kleine Lagerdurchmesser) und 12 mm (große Lagerdurchmesser).

Nach einer Ausführungsform des erfindungsgemäßen Großwälzlagers ist vorgesehen, dass die Breite der vierten Dichtlippe in dem an den Grundkörper der Spaltdichtung angrenzenden Übergangsbereich zwischen 0,1 mm und 3 mm beträgt.

Gemäß einer Ausführungsform des erfindungsgemäßen Großwälzlagers ist vorgesehen, dass der Anstellwinkel (γ) im eingebauten Zustand in einem Bereich 6° ≤ γ ≤ 30° liegt.

Der Anstellwinkel γ ist eine geometrische Kenngröße, die die Anstellung der vierten Dichtlippe zum Grundkörper beschreibt. Sie kann sich im eingebauten Zustand vom nicht eingebauten Zustand (sog. Dichtungsprofil) unterscheiden. I.d.R. ist der Differenzwinkel zwischen dem Anstellwinkel des Dichtungsprofils und dem Anstellwinkel im eingebauten Zustand positiv, d.h. der Anstellwinkel der vierten Dichtlippe des Dichtungsprofils ist größer als der Anstellwinkel im eingebauten Zustand.

Eine Vergrößerung des Differenzwinkels durch Verkleinerung des Anstellwinkels (γ) im eingebauten Zustand der Spaltdichtung führt zu einer stärkeren Vorspannung der vierten Dichtlippe gegen die vierte Dichtfläche im Einbauzustand der Spaltdichtung, so dass die Fähigkeit der vierten Dichtlippe zum Ausgleich von Dichtspaltvergrößerungen vergrößert wird, d.h. mit kleineren Anstellwinkeln (γ) im eingebauten Zustand können größere Dichtspaltvergrößerungen ausgeglichen werden ohne die Dichtwirkung der vierten Dichtlippe zu verlieren, als dies mit größeren Anstellwinkeln (γ) im eingebauten Zustand möglich ist.

Nach einer Ausführungsform des erfindungsgemäßen Großwälzlagers ist vorgesehen, dass die vierte Dichtfläche verschleißschutzgehärtet ist, z.B. mittels induktivem Randschichthärten. Ein verbleibender umfangsseitiger Bereich mit geringerer Härte ist hierbei zulässig. Die Verschleißschutzhärtung stellt sicher, dass die Dichtwirkung der vierten Dichtlippe nicht durch Verschleiß der vierten Dichtfläche verringert oder gar verloren geht.

Gemäß einer Ausführungsform des erfindungsgemäßen Großwälzlagers ist vorgesehen, dass die Spaltdichtung an ihrer Außenseite eine Abreißdichtung aufweist, wobei die Abreißdichtung eine Schutzlippe aufweist, die dazu eingerichtet ist, ein Eindringen von Strahlgut aus einem Partikelstrahlverfahren, das zur Oberflächenbehandlung des ersten Lagerrings eingesetzt wird, in einen Zwischenraum zwischen dem ersten Lagerring und der Spaltdichtung zu verhindern. In der Praxis wird ein Oberflächenbereich des ersten Lagerrings, der in der Nähe der eingebauten Spaltdichtung angeordnet ist, häufig mit einem Beschichtungsverfahren, zum Beispiel mittels Zinkflammspritzen, beschichtet. Um den zu beschichtenden Oberflächenbereich für die Oberflächenbeschichtung vorzubereiten, wird zur Erzielung einer gewünschten Oberflächenrauheit ein Partikelstrahlverfahren eingesetzt. Durch die an der Abreißdichtung angeordnete Schutzlippe wird erfindungsgemäß das Eindringen von Strahlgut, das in dem Partikelstrahlverfahren eingesetzt wird, in einen Zwischenraum zwischen dem ersten Lagerring und der Spaltdichtung verhindert. Dadurch werden mechanische Beschädigungen an der Spaltdichtung verhindert, die ansonsten durch Partikel des Strahlgutes, die in den Zwischenraum zwischen erstem Lagerring und Spaltdichtung gelangen, verursacht werden können.

Die Erfindung wird nachfolgend anhand der Figuren näher erläutert. Es zeigen jeweils schematisch
- Fig. 1: ein erfindungsgemäßes Großwälzlager gemäß einer ersten Ausführungsform der Erfindung;
- Fig. 2: ein erfindungsgemäßes Großwälzlager gemäß einer zweiten Ausführungsform der Erfindung;
- Fig.: 3 ein nicht erfindungsgemäß ausgebildetes Großwälzlager mit einer fehlerhaft eingebauten Spaltdichtung;
- Fig. 4: eine vergrößerte Detaildarstellung des Dichtungsspaltbereiches des erfindungsgemäßen Großwälzlagers gemäß der ersten oder der zweiten Ausführungsform;
- Fig. 5: eine vergrößerte Detaildarstellung der Schutzlippe der Abreißdichtung gemäß der ersten oder der zweiten Ausführungsform.

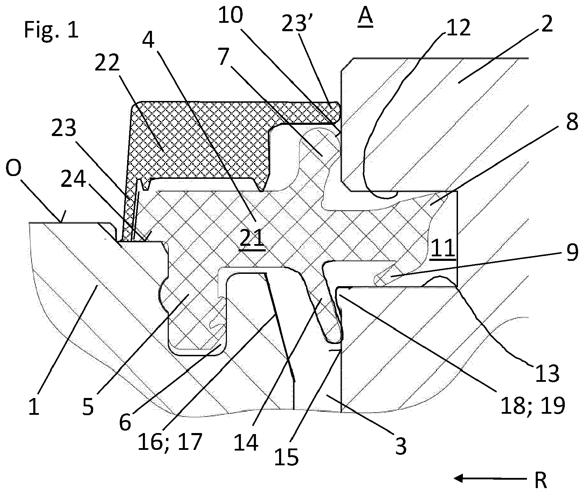

Fig. 1 zeigt ein erfindungsgemäß ausgebildetes Großwälzlager mit Spaltdichtung 4 in Einbaulage gemäß einer ersten Ausführungsform der Erfindung. Der erste Lagerring 1 ist als Außenring des Großwälzlagers ausgebildet, während der zweite Lagerring 2 den Innenring des Großwälzlagers bildet. Zwischen dem ersten Lagerring 1und dem zweiten Lagerring 2 ist ein Spalt 3 ausgebildet. Um das Austreten von Schmiermittel wie z.B. Schmierfett aus dem Lagerinneren auf die Außenseite A des Großwälzlagers zu verhindern muss der Spalt 3 abgedichtet werden. Hierzu ist die Spaltdichtung 4 vorgesehen.

Die Spaltdichtung weist einen Dichtungsfuß 5 auf, mit dem die Spaltdichtung 4 in einer in dem ersten Lagerring 1 vorgesehenen umlaufenden Verankerungsnut 6 verankert ist. Der Dichtungsfuß 5 und die Verankerungsnut 6 können z.B. Formschlusselemente aufweisen, mit denen der Dichtungsfuß 5 formschlüssig in der Verankerungsnut 6 einsitzt.

Weiter weist die Spaltdichtung 4 eine erste Dichtlippe 7, eine zweite Dichtlippe 8 und eine dritte Dichtlippe 9 auf. Die erste Dichtlippe 7 wirkt mit einer an dem zweiten Lagerring 2 ausgebildeten ersten Dichtfläche 10 zusammen. Die zweite Dichtlippe 8 und die dritte Dichtlippe 9 sind in einer in dem zweiten Lagerring 2 ausgebildeten Gleitnut 11 angeordnet. Die zweite Dichtlippe 8 wirkt mit einer zweiten Dichtfläche 12 zusammen und die dritte Dichtlippe 9 wirkt mit einer dritten Dichtfläche 13 zusammen. In dem in Fig. 1 dargestellten Ausführungsbeispiel ist die zweite Dichtfläche 12 an einer der Außenseite A des Großwälzlagers zugeordneten Begrenzungsfläche der Gleitnut 11 ausgebildet. Die dritte Dichtfläche 13 ist an einer Begrenzungsfläche der Gleitnut 11 ausgebildet, die dem Inneren des Großwälzlagers zugeordnet ist.

Von der Außenseite A des Großwälzlagers her gesehen ist die erste Dichtfläche 10 in Axialrichtung vor der zweiten Dichtfläche 12 angeordnet. Die zweite Dichtfläche 12 ist von der Außenseite A her gesehen in Axialrichtung vor der dritten Dichtfläche 13 angeordnet.

Die Gleitnut 11 ist in dem in Fig. 1 dargestellten Ausführungsbeispiel als in Radialrichtung R verlaufende Nut ausgebildet, d.h. die die zweite Dichtungsfläche 12 beinhaltende Begrenzungsfläche der Gleitnut 11 erstreckt sich in Radialrichtung R und die die dritte Dichtungsfläche 13 beinhaltende Begrenzungsfläche der Gleitnut 11 erstreckt sich ebenfalls in Radialrichtung R. Denkbar wäre jedoch auch, dass sich die die zweite Dichtfläche 12 und die dritte Dichtfläche 13 beinhaltenden Begrenzungsflächen der Gleitnut 11 schräg zur Radialrichtung R erstrecken. In diesem Fall schließen die die zweite Dichtfläche 12 und die dritte Dichtfläche 13 beinhaltenden Begrenzungsflächen der Gleitnut 11 mit dem Spalt 3 einen Winkel ein.

Treten z.B. aufgrund von Belastungen aus Kräften und Momenten, die im Betrieb des Großwälzlagers auf den ersten 1 und zweiten Lagerring 2 einwirken, Aufweitungen des Spaltes 3 in radialer Richtung auf, dann kann die zweite Dichtlippe 8 auf der zweiten Dichtfläche 12 und die dritte Dichtlippe 9 auf der dritten Dichtfläche 13 entlanggleiten, ohne dass dabei die Dichtwirkung der jeweiligen Dichtlippe verloren geht. Aus diesem Grund wird für die Nut, in der die zweite Dichtlippe 12 und die dritte Dichtlippe 13 im Einbauzustand der Spaltdichtung 4 angeordnet sind, die Bezeichnung "Gleitnut" verwendet.

Erfindungsgemäß weist die Spaltdichtung 4 zusätzlich zu der ersten, zweiten und dritten Dichtlippe eine vierte Dichtlippe 14 auf. Die vierte Dichtlippe 14 ist in dem Spalt 3 angeordnet und erstreckt sich in den Spalt 3 hinein. Die vierte Dichtlippe 14 stützt sich an einer vierten Dichtfläche 15 ab. Die vierte Dichtfläche 15 ist an dem zweiten Lagerring 2 an einem den Spalt 3 in radialer Richtung R begrenzenden Abschnitt ausgebildet. Die mit der vierten Dichtlippe 14 zusammenwirkende vierte Dichtfläche 15 ist von der Außenseite A des Großwälzlagers her gesehen in Axialrichtung hinter der dritten Dichtfläche 13 angeordnet. Die vierte Dichtfläche 15 bildet somit diejenige Dichtfläche, die sich in Axialrichtung in den Spalt 3 hinein erstreckt. Die vierte Dichtlippe 14 und die vierte Dichtfläche 15 bilden im Vergleich zu dem gattungsbildenden Stand der Technik eine zusätzliche Dichtstelle, die zu einer besseren Abdichtung des Großwälzlagers führt.

Liegt in dem Inneren des Großwälzlagers ein Überdruck vor, so wird die vierte Dichtlippe 14 von dem Überdruck an die vierte Dichtfläche 15 angepresst. Auf diese Weise wird durch den Überdruck die Dichtwirkung der vierten Dichtlippe 14 weiter erhöht. Ein Überdruck im Lagerinneren kann z.B. durch bewussten Aufbau eines Überdruckes durch aktives Einleiten eines Druckgases in das Lagerinnere aufgebaut werden. Ein Überdruck im Lagerinneren kann sich aber auch während des Betriebs des Großwälzlagers sozusagen "von selbst" einstellen. Das erfindungsgemäße Großwälzlager ist in jedem Fall besonders gut an solche Betriebszustände mit Überdruck im Lagerinneren angepasst. Die Erfindung verbessert zum einen die Dichtwirkung insbesondere bei solchen Überdruck-Betriebszuständen, zu anderen ist durch die Erfindung die Gefahr erheblich verringert, dass die Spaltdichtung durch den Innendruck aus ihrem Einbausitz herausgedrückt wird und die Dichtwirkung damit verloren geht.

Das Großwälzlager nach Fig. 1 weist einen Montagebereich 16 auf. Im dargestellten Ausführungsbeispiel ist der Montagebereich 16 als Montagefase 17 ausgebildet. Anstelle eine linearen Montagefase 17 mit konstantem Fasenwinkel sind erfindungsgemäß auch andere Ausbildungen des Montagebereichs 16 denkbar, z.B. ein stufenförmiger Verlauf oder ein abgerundeter Verlauf, der durch einen Kurvenzug.

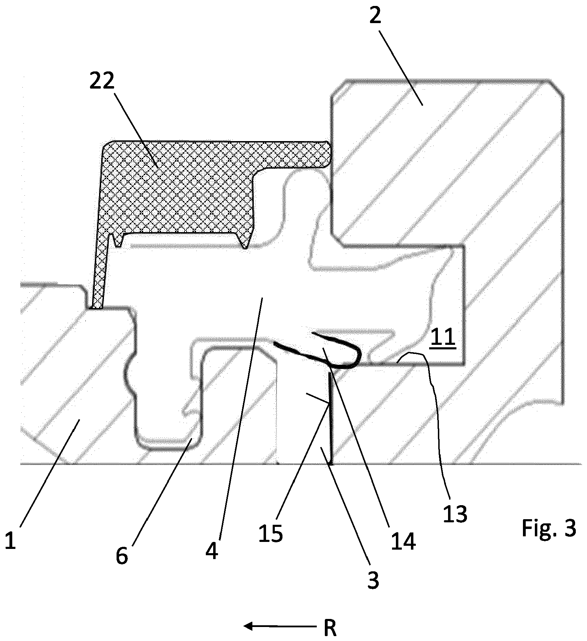

Der Montagebereich ist in einem der vierten Dichtfläche 14 gegenüberliegenden, den Spalt 3 begrenzenden Oberflächenbereich des Spalts 3 angeordnet. Durch den Montagebereich wird die Breite des Spalts 3 derart erweitert, dass die den Spalt 3 begrenzende Oberfläche des ersten Lagerrings 1 bei der Montage der Spaltdichtung 4 nicht auf die vierte Dichtlippe 14 einwirken und diese nach oben in Richtung Gleitnut 11 drücken kann. Dadurch wird insbesondere ein unerwünschtes Eindrücken der vierten Dichtlippe 14 in die Gleitnut 11 hinein vermieden (vgl. Fig. 3).

Bei der in Fig. 1 dargestellten Ausführungsform der Erfindung weist der zweite Lagerring 2 in einem Bereich 18 zwischen der vierten Dichtfläche 14 und der Gleitnut 11 eine Durchmesservergrößerung 19 auf, durch welche die Breite des Spaltes 3 verringert wird. Die Durchmesservergrößerung 19 des zweiten Lagerrings 2 ragt in den Spalt 3 hinein und verringert daher die Spaltbreite. Durch die Durchmesservergrößerung 19 wird die vierte Dichtlippe 14 daran gehindert, in die Gleitnut 11 hineingedrückt zu werden.

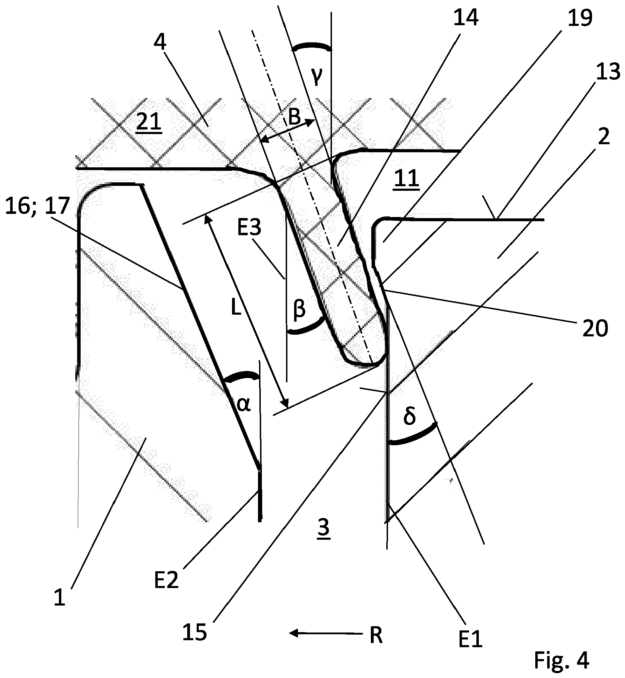

Die in Fig. 1 dargestellte Durchmesservergrößerung 19 ist in Fig. 4 in einer vergrößerten Detaildarstellung gezeigt. Die Geometrie der Durchmesservergrößerung 19 wird daher nachfolgend anhand der Fig. 4 genauer beschrieben.

Die in Fig. 1 dargestellte vierte Dichtfläche 15 ist verschleißschutzgehärtet, um einen Verschleiß der Dichtfläche und damit eine abnehmende Dichtwirkung der vierten Dichtlippe 14 zu vermeiden. Das Verschleißschutzhärten kann z.B. durch induktives Randschichthärten vorgenommen werden.

Weiterhin ist in Fig.1 gezeigt, dass die Spaltdichtung 4 an ihrer Außenseite eine Abreißdichtung 22 aufweist. Die Abreißdichtung 22 weist mindestens eine Schutzlippe 23 auf, die ein Eindringen von Strahlgut aus einem Partikelstrahlverfahren, das zur Oberflächenbehandlung des ersten Lagerrings 1 eingesetzt wird, in einen Zwischenraum zwischen dem ersten Lagerring 1 und der Spaltdichtung 4 verhindert. Die Abreißdichtung 22 ist auf der Außenseite der Spaltdichtung 4 angeordnet und lösbar mit der Spaltdichtung 4 verbunden.

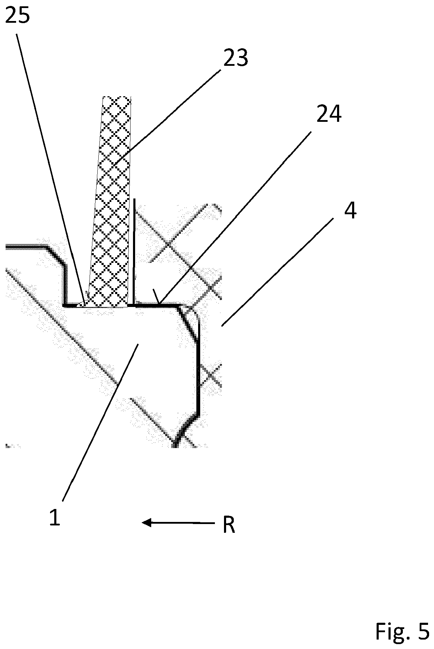

In der Praxis wird die in der Nähe des Spaltes angeordnete Oberfläche O des ersten Lagerrings 1 mittels eines Partikelstrahlverfahrens oberflächenbehandelt, um die Rauheit der Oberfläche O zu erhöhen und so die Oberfläche O für eine anschließende Oberflächenbeschichtung (z.B. durch Zinkflammspritzen) vorzubereiten. Um zu verhindern, dass Feststoffpartikel bei der Durchführung des Partikelstrahlverfahrens in einen Zwischenraum zwischen dem ersten Lagerring 1 und der Spaltdichtung 4 eindringen, erstreckt sich eine Schutzlippe 23 bis zu einer an die Verankerungsnut 6 angrenzenden Radialfläche 24 und sitzt auf dieser auf. Damit wird das Eindringen von Feststoffpartikeln in den Zwischenraum zwischen dem ersten Lagerring 1 und der Spaltdichtung 4 verhindert. Noch wirksamer ist die Verhinderung des Eindringens von Strahlgut in diesen Zwischenraum, wenn die Schutzlippe 23 an ihrem sich auf der Radialfläche 24 abstützenden Ende einen in Radialrichtung R von dem Spalt 3 weg gerichteten Schutzlippenabsatz 25 aufweist (siehe Detaildarstellung gemäß Fig. 5).

Bei der in Fig. 1 dargestellten Ausführungsform der Erfindung weist die Abreißdichtung 22 noch eine zweite Schutzlippe 23' auf, die sich in Radialrichtung R über der ersten Dichtlippe 7 erstreckt. Diese zweite Schutzlippe 23' dient dazu, dass Eindringen von Strahlgut in den Zwischenraum zwischen dem zweiten Lagerring 2 und der Spaltdichtung 4 zu verhindern.

Nach Beendigung der Oberflächenbehandlung mittels des Partikelstrahlverfahrens wird das auf der Oberfläche des Großwälzlagers verbleibende Strahlgut in der Regel mittels Druckluft entfernt. Anschließend kann die Abreißdichtung 22 von dem sie tragenden Grundkörper 21 der Spaltdichtung 4 abgerissen und entfernt werden. Alternativ kann die Abreißdichtung 22 auch erst nach der auf das Partikelstrahlen folgenden Oberflächenbeschichtung (die z.B. mittels Zinkflammspritzen erfolgt) abgerissen und entfernt werden.

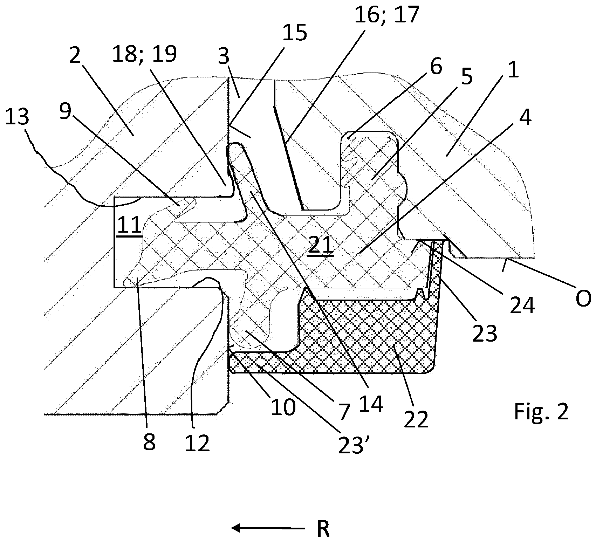

In Fig. 2 ist eine zweite Ausführungsform des erfindungsgemäßen Großwälzlagers dargestellt. Der einzige Unterschied zu der ersten Ausführungsform gemäß Fig. 1 besteht darin, dass der erste Lagerring 1 der Lagerinnenring und der zweite Lagerring 2 der Lageraußenring des Großwälzlagers bildet. Ansonsten gilt die Beschreibung zu Fig. 1 auch für die Ausführungsform nach Fig. 2.

Die erfindungsgemäße Spaltdichtung 4 kann unabhängig davon eingesetzt werden, ob der erste Lagerring 1 einen stehenden und der zweite Lagerring 2 einen drehenden Lagerring bildet, oder ob es umgekehrt ist.

Was mit dem im Rahmen der vorliegenden Beschreibung verwendeten Begriff "unerwünschtes Eindrücken der vierten Dichtlippe 14 in die Gleitnut 11 hinein" gemeint ist, ist in Fig. 3 anhand eines nicht erfindungsgemäß ausgebildeten Großwälzlagers dargestellt. Der in Fig. 3 gezeigte erste Lagerring 1 weist keinen Montagebereich 16 auf. Die den Spalt 3 begrenzende Oberfläche des ersten Lagerrings 1 erstreckt sich in axialer Richtung so weit, dass sie die Gleitnut 11 radial etwas überlappt. Dadurch kann es bei der Montage der Spaltdichtung 4 vorkommen, dass die vierte Dichtlippe 14 durch das zwischen der Verankerungsnut 6 und dem Spalt 3 angeordnete Material des ersten Lagerrings 1 in die Gleitnut 11 hineingedrückt wird. Dieser Zustand ist in Fig. 3 dargestellt. Die vierte Dichtlippe 14 kommt in diesem Zustand dann mit der dritten Dichtfläche 13 innerhalb der Gleitnut 11 in Kontakt. Wenn das geschieht, dann ist die Dichtwirkung der vierten Dichtlippe 14 nicht mehr gegeben. Ein erhöhter Lagerinnendruck führt dann nicht mehr zu einem Anpressen der vierten Dichtlippe 14 gegen die vierte Dichtfläche 15 an dem zweiten Lagerring 2 und damit zu einer Erhöhung der Dichtwirkung (wie in Fig. 1 und 2), sondern zu einer Verringerung der Dichtwirkung, weil die vierte Dichtlippe 14 durch den erhöhten Lagerinnendruck von der dritten Dichtfläche 13 weggedrückt wird.

In Fig. 4 ist die Spaltdichtung 4 in Einbaulage in einer vergrößerten Darstellung dargestellt. Die vierte Dichtlippe 14 ragt in den Spalt 3 zwischen dem ersten 1 und dem zweiten Lagerring 2 hinein. Die vierte Dichtlippe 14 stützt sich an der vierten Dichtfläche 15 ab, die an einem den Spalt 3 begrenzenden Oberflächenbereich des zweiten Lagerringes 2 ausgebildet ist. Die vierte Dichtfläche 15 ist verschleißschutzgehärtet. Die vierte Dichtlippe 14 weist einen Anstellwinkel γ auf. Der Anstellwinkel γ wird von der dem zweiten Lagerring 2 zugewandten Oberfläche der vierten Dichtlippe 14 und der ersten Bezugsebene E1 eingeschlossen. Im dargestellten Ausführungsbeispiel liegt der Anstellwinkel γ zwischen 6° und 30°. Außerdem weist die vierte Dichtlippe 14 einen Abspreizwinkel β auf, der zwischen 6° und 30° liegt. Der Abspreizwinkel β wird von der dem ersten Lagerring 1 zugewandten Oberfläche der vierten Dichtlippe 14 und einer dritten Bezugsebene E3 eingeschlossen, wobei die dritte Bezugsebene E3 parallel zu der ersten Bezugsebene E1 verläuft.

Ferner ist an dem ersten Lagerring 1 ein Montagebereich 16 vorgesehen, der als Montagefase 17 ausgebildet ist. Die Montagefase 17 weist einen Fasenwinkel α auf. Im dargestellten Ausführungsbeispiel ist der Fasenwinkel α gleich groß wie der Abspreizwinkel β. Der Fasenwinkel α wird von der Oberfläche des Montagebereichs 16 bzw. der Montagefase 17 und einer zweiten Bezugsebene E2 eingeschlossen. Die zweite Bezugsebene E2 ist im dargestellten Ausführungsbeispiel parallel zu der dritten Bezugsebene E3 und der ersten Bezugsebene E1 angeordnet.

Der zweite Lagerring 2 weist im Übergangsbereich zwischen der vierten Dichtfläche 15 und der Gleitnut 11 eine Durchmesservergrößerung 19 auf. Die Durchmesservergrößerung umfasst eine Übergangsfläche 20 und einen angeformten Radius, der im Übergangsbereich von der den Spalt 3 begrenzenden Oberfläche auf die dritte Dichtfläche 13 der Gleitnut 11 an einer Kante des zweiten Lagerrings 2 ausgebildet ist. Die Übergangsfläche 20 ist im dargestellten Ausführungsbeispiel als konische Ringfläche ausgebildet. Sie grenzt an die erste Bezugsebene E1 an und schließt mit dieser einen Übergangswinkel δ ein. Im dargestellten Ausführungsbeispiel ist der Übergangswinkel δ gleich groß wie der Anstellwinkel γ der vierten Dichtlippe 14.

Durch die Durchmesservergrößerung wird die vierte Dichtlippe 14 formschlüssig abgestützt, wenn sie aufgrund eines erhöhten Lagerinnendruckes gegen den zweiten Lagerring 2 gedrückt wird. Dies trägt zu einer lagestabilen Anordnung der Spaltdichtung 4 im Spalt 3 bei. Außerdem hilft die Durchmesservergrößerung dabei, ein Hindrücken der vierten Dichtlippe 14 in die Gleitnut 11 zu vermeiden, welches insbesondere bei der Montage der Spaltdichtung 4 auftreten kann.

Die im dargestellten Ausführungsbeispiel als konische Ringfläche ausgebildete Übergangsfläche 20 hat bei der Montage der Spaltdichtung die Funktion und die Wirkung einer Einführfase für die vierte Dichtlippe 14. Die Übergangsfläche 20 dient damit zur sicheren Montage der Spaltdichtung 4 und zur Vermeidung des "Einklappens" der vierten Dichtlippe 14 in die Gleitnut 11.

Außerdem bewirkt die Übergangsfläche 20 eine Erhöhung der Dichtwirkung bei Auftreten einer Dichtspaltvergrößerung, weil sich bei einer Dichtspaltvergrößerung der Kontaktpunkt der vierten Dichtlippe 14 mit dem zweiten Lagerring 2 in den Bereich der Übergangsfläche 20 verschiebt. Dies führt zu einem erhöhten Anpressdruck der vierten Dichtlippe 14 und damit zu einer Erhöhung der Dichtwirkung.

Weiterhin hat die Übergangsfläche 20 die Wirkung, dass ein erhöhter Innendruck im Lager zu einer zusätzlichen Abstützung der vierten Dichtfläche 14 an der Übergangsfläche 20 durch Verformung der vierten Dichtlippe 14 führt. Diese zusätzliche Abstützung an der Übergangsfläche 20 führt zu einer erhöhten Dichtigkeit und geringeren mechanischen Beanspruchung der vierten Dichtlippe 14.

Die vierte Dichtlippe 14 weist eine Mittellinie auf. Die Längserstreckung der vierten Dichtlippe 14, ausgehend von dem Grundkörper 21 der Spaltdichtung 4, weist entlang der Mittellinie eine Länge L auf. Die Länge L der vierten Dichtlippe 14 ist eine Funktion des Lagerdurchmessers und beträgt zwischen 1 mm und 12 mm.

Fig. 5 zeigt eine vergrößerte Detaildarstellung der an der Abreißdichtung 22 angeordneten Schutzlippe 23. Die Schutzlippe 23 verhindert, dass Feststoffpartikel bei der Durchführung eines Partikelstrahlverfahrens in einen Zwischenraum zwischen dem ersten Lagerring 1 und der Spaltdichtung 4 eindringen können. Die Schutzlippe 23 erstreckt sich ausgehend von der Abreißdichtung 22 hinunter bis zu einer an die (in Fig. 5 nicht dargestellte) Verankerungsnut 6 angrenzenden Radialfläche 24 und sitzt auf dieser auf. Damit wird das Eindringen von Feststoffpartikeln in den Zwischenraum zwischen dem ersten Lagerring 1 und der Spaltdichtung 4 verhindert. Die Schutzlippe 23 weist an ihrem sich auf der Radialfläche 24 abstützenden Ende einen in Radialrichtung R von dem Spalt 3 weg gerichteten Schutzlippenabsatz 25 auf. Damit wird noch wirksamer ein Eindringen von Strahlgut in den Zwischenraum zwischen dem ersten Lagerring 1 und der Spaltdichtung 4 verhindert.

### Bezugszeichenliste

- 1: Lagerring
- 2: Lagerring
- 3: Spalt
- 4: Spaltdichtung
- 5: Dichtungsfuß
- 6: Verankerungsnut
- 7: erste Dichtlippe
- 8: zweite Dichtlippe
- 9: dritte Dichtlippe
- 10: erste Dichtfläche
- 11: Gleitnut
- 12: zweiten Dichtfläche
- 13: dritte Dichtfläche
- 14: vierte Dichtlippe
- 15: vierte Dichtfläche
- 16: Montagebereich
- 17: Montagefase
- 18: Bereich
- 19: Durchmesservergrößerung
- 20: Übergangsfläche
- 21: Grundkörper
- 22: Abreißdichtung
- 23: Schutzlippe
- 24: Radialfläche
- A: Außenseite
- E1: erste Bezugsebene
- E2: zweite Bezugsebene
- E3: dritte Bezugsebene
- α: Fasenwinkel
- β: Abspreizwinkel
- γ: Anstellwinkel
- δ: Übergangswinkel
- L: Länge
- D: Lagerlaufkreisdurchmesser
- R: Radialrichtung

## Patentansprüche

1. Großwälzlager mit einem ersten Lagerring (1), einem zweiten Lagerring (2), und mit einem Spalt (3) zwischen dem ersten (1) und dem zweiten Lagerring (2), wobei in dem Spalt (3) eine ringförmige Spaltdichtung (4) angeordnet ist, mit der ein Austreten von Schmierstoff aus dem Inneren des Großwälzlagers nach außen verhinderbar ist,
wobei die Spaltdichtung (4) einen Dichtungsfuß (5) aufweist, der in einer in dem ersten Lagerring (1) vorgesehenen Verankerungsnut (6) aufgenommen ist, wobei die Spaltdichtung (4) eine erste Dichtlippe (7), eine zweite Dichtlippe (8) und eine dritte Dichtlippe (9) aufweist,
wobei sich die erste Dichtlippe (7) gegen eine an dem zweiten Lagerring (2) ausgebildete erste Dichtfläche (10) abstützt,
wobei die zweite (8) und die dritte Dichtlippe (9) in einer in dem zweiten Lagerring (2) angeordneten Gleitnut (11) derart aufgenommen sind, dass die zweite Dichtlippe (8) sich gegen eine die Gleitnut (11) begrenzende zweite Dichtfläche (12) und die dritte Dichtlippe (9) sich gegen eine die Gleitnut begrenzende dritte Dichtfläche (13) abstützt,
wobei von einer Außenseite (A) des Großwälzlagers her gesehen die erste Dichtfläche (10) vor der zweiten Dichtfläche (12) und die zweite Dichtfläche (12) vor der dritten Dichtfläche (13) angeordnet ist,
**dadurch gekennzeichnet, dass**
die Spaltdichtung (4) eine in dem Spalt (3) angeordnete vierte Dichtlippe (14) aufweist, die sich in den Spalt (3) hinein erstreckt und an einer vierten Dichtfläche (15) abstützt,
wobei die vierte Dichtfläche (15) an einem den Spalt (3) in radialer Richtung begrenzenden Abschnitt des zweiten Lagerrings (2) ausgebildet ist,
und wobei die vierte Dichtfläche (15) von der Außenseite (A) des Großwälzlagers her gesehen hinter der dritten Dichtfläche (13) angeordnet ist.

2. Großwälzlager nach Anspruch 1, wobei die vierte Dichtlippe (14) mit einer die vierte Dichtfläche (15) beinhaltenden ersten Bezugsebene (E1) einen Anstellwinkel (γ) einschließt, wobei die vierte Dichtlippe (14) in einem an einen Grundkörper (21) der Spaltdichtung (4) angrenzenden Übergangsbereich eine Breite (B) aufweist, wobei die Fähigkeit des Lagers, eine Dichtspaltvergrößerung auszugleichen, durch die Wahl des Anstellwinkels (γ) und der Breite (B) sowie einer senkrecht zur Breite verlaufenden Länge (L) der vierten Dichtlippe (14) einstellbar ist.

3. Großwälzlager nach Anspruch 1 oder 2, wobei der erste Lagerring (1) in einem der vierten Dichtfläche (15) gegenüberliegenden, den Spalt (3) begrenzenden Oberflächenbereich einen Montagebereich (16) aufweist, durch den sich die Breite des Spalts (3) erweitert.

4. Großwälzlager nach Anspruch 3, wobei der Montagebereich (16) als Montagefase (17) ausgebildet ist, durch die sich die Breite des Spalts (3) konisch erweitert, wobei eine gedachte Verlängerung der Montagefase (17) mit einer zu der ersten Bezugsebene (E1) parallelen zweiten Bezugsebene (E2) einen Fasenwinkel (α) einschließt.

5. Großwälzlager nach Anspruch 4, wobei die vierte Dichtlippe (14) mit einer zu der ersten Bezugsebene (E1) parallelen dritten Bezugsebene (E3) einen Abspreizwinkel (β) einschließt, und wobei der Fasenwinkel (α) größer oder gleich dem Abspreizwinkel (β) ist.

6. Großwälzlager nach einem der voranstehenden Ansprüche, wobei der zweite Lagerring (2) in einem Bereich (18) zwischen der vierten Dichtfläche (15) und der Gleitnut (11) eine die Breite des Spalts (3) verringernde Durchmesservergrößerung (19) aufweist.

7. Großwälzlager nach Anspruch 6, wobei die Durchmesservergrößerung (19) eine Übergangsfläche (20) umfasst, wobei die Übergangsfläche (20) an die erste Bezugsebene (E1) angrenzt, wobei die Übergangsfläche (20) mit der ersten Bezugsebene (E1) einen Übergangswinkel (δ) einschließt.

8. Großwälzlager nach Anspruch 7, wobei der Übergangswinkel (δ) kleiner oder gleich groß ist wie der Anstellwinkel (γ).

9. Großwälzlager nach einem der voranstehenden Ansprüche, wobei die vierte Dichtlippe (14) eine Mittelachse aufweist, wobei eine Längserstreckung der vierten Dichtlippe (14) ausgehend von einem Grundkörper (21) der Spaltdichtung (4) und entlang ihrer Mittelachse eine Länge (L) aufweist, wobei die Länge (L) eine Funktion des Lagerdurchmessers ist und zwischen 1 mm und 12 mm berägt.

10. Großwälzlager nach einem der Ansprüche 2 bis 9, wobei die Breite (B) der vierten Dichtlippe (14) in dem an den Grundkörper (21) der Spaltdichtung (4) angrenzenden Übergangsbereich zwischen 0,1 mm und 3 mm beträgt.

11. Großwälzlager nach einem der Ansprüche 2 bis 10, wobei der Anstellwinkel (γ) in einem Bereich 6° ≤ γ ≤ 30° liegt.

12. Großwälzlager nach einem der voranstehenden Ansprüche, wobei die vierte Dichtfläche (15) verschleißschutzgehärtet ist.

13. Großwälzlager nach einem der voranstehenden Ansprüche, wobei die Spaltdichtung (4) an ihrer Außenseite eine Abreißdichtung (22) aufweist, wobei die Abreißdichtung (22) mindestens eine Schutzlippe (23) aufweist, die dazu eingerichtet ist, ein Eindringen von Strahlgut aus einem Partikelstrahlverfahren, das zur Oberflächenbehandlung des ersten Lagerrings (1) eingesetzt wird, in einen Zwischenraum zwischen dem ersten Lagerring (1) und der Spaltdichtung (4) zu verhindern.
